(19) Europäisches Patentamt
European Patent Office
Office européen des brevets

(11) Publication number: **0 196 175**
**A2**

(12) # EUROPEAN PATENT APPLICATION

(21) Application number: **86301591.3**

(22) Date of filing: **06.03.86**

(51) Int. Cl.[4]: **F 24 F 12/00**, F 28 F 3/08

(30) Priority: **12.03.85 GB 8506415**

(43) Date of publication of application: **01.10.86**
**Bulletin 86/40**

(84) *Designated Contracting States:* **DE FR GB IT NL**

(71) Applicant: **Atkin, Howard Stuart, 5 Inholmes Lane Station Road, Tadcaster West Yorkshire (GB)**
Applicant: **Palmer, Christopher John, 99 Lidgett Lane, Leeds 8 West Yorkshire (GB)**

(72) Inventor: **Atkin, Howard Stuart, 5 Inholmes Lane Station Road, Tadcaster West Yorkshire (GB)**
Inventor: **Palmer, Christopher John, 99 Lidgett Lane, Leeds 8 West Yorkshire (GB)**

(74) Representative: **Harrison, Michael Robert, Urquhart-Dykes & Lord 5th Floor Tower House Merrion Way, Leeds, LS2 8PA (GB)**

(54) **Thermally efficient room ventilator.**

(57) A room ventilator 1a for insertion within a wall or window 3 of the room comprises two fans 1 mounted side by side, and a heat exchanger 2 located inwardly of the fans. The construction of the heat exchanger 2 is such that the incoming and outgoing airstreams cross over within the length of the unit to ensure efficient heat exchange and to prevent intermixing and recirculation of air.

4
6
5
2b
3
1
1
3
1a
2
2a

**EP 0 196 175 A2**

THERMALLY EFFICIENT ROOM VENTILATOR

The present invention relates to a room ventilator, and particularly to the type of ventilator which is mounted within a wall or window of a room.

Room ventilators are well known devices which usually consist of a casing built into an external wall or window of a room. The ventilator incorporates a fan which extracts stale air from the room, fresh air being drawn into the room to replace it via gaps around access doors and windows. The extraction of air in such circumstances provides for the substantial loss of heat which is contained in the extracted air. In addition to the above loss of heat, the extractor units are often noisy and as consequence are generally used only intermittently. There are, in addition to the above, extractor units which contain two fans, the first extracting air from the room whilst the second supplies fresh air from the outside of the building into the room.

According to the present invention there is provided apparatus for extracting stale air from inside a room and introducing fresh air into the room from outside the room, the apparatus comprising an enclosure for insertion in a wall or window of the room with the first end of the enclosure being open to the outside of the room, and a second end being open to the inside of the room, two fans located at or near said first end, one of which is drivable to introduce air into the room from outside, and the other being drivable to extract air from the room, and means to effect heat exchange between the outgoing and incoming air.

Preferably the means to effect heat exchange between the outgoing and incoming air comprises a parallel input and output heat exchanger, with the input and output directions substantially parallel. This means that the fans may be mounted side by side at one end of the heat exchanger. The resultant assembly is then most suitable for mounting in an enclosure in the form of a tubular air tunnel member which is preferably adjustable in length to suit varying wall or window thicknesses, for example between double glazing. A suitable tube arrangement is two concentric tubes in sliding interengagement with a seal member between the tubes. The tubes may be circular in cross-section, but are more preferably rectangular in cross-section.

Preferably the heat exchanger includes means to separate the incoming and outgoing air into two distinct air streams, and to cause the two streams to cross over within the heat exchanger whereby air enters and leaves the heat exchanger in two separate and distinct regions at each end of the enclosure. This cross over effect serves to increase the efficiency of heat exchange, and also ensures that the air stream exiting from the apparatus is spaced from the entering air stream, thus avoiding intermixing and recirculation of the air. Shaped grills may be provided to further separate the two air flows.

Preferably the heat exchanger comprises an assembly of stacked thermally conducting sheets.

The sheets may be of metal, or plastic, or metallised plastic.

In one embodiment of the invention, the sheets are corrugated to ensure that the two air streams are both separated from each other and directed along Z-shaped paths in the plan view to give the required cross over effect within the length of the heat exchanger.

In an alternative embodiment, the sheets are in the form of trays having a base and side and end walls, diagonally opposed end portions of said end walls being cut away to create the desired cross over and separation effect.

Preferably a spray suppression member is provided between the heat exchanger and the fans to ensure excessive moisture is not allowed to pass the fans and their associated motors. A similar spray suppression member may also be provided at the room side of the heat exchanger, and also if necessary at the outer end of the assembly. The spray suppression members are preferably condensate spray suppression members which include drains at the base connected to the outside end of the unit so that water may be drained away. The condensate spray suppression member is preferably an open high porosity element having 90% or greater voids which acts also to suppress noise transmission from outside and from the fan motors.

Preferably the enclosure is arranged to have a downward slope towards the outside so that water is drained outwards from the unit.

Dust collection means may be provided together with means to effect fan reversal to blow collected dust outside when the unit is purged. This may be done automatically when the unit is switched off by means of a built in short high speed fan period. The dust filtration may be by conventional filters but is more preferably by means of electrostatic dust collection achieved by using aluminium or other electrically conducting sheets in the heat exchanger and by connecting the conducting sheets to a source of high potential, adjacent to the heat exchanger, for example at the inlet a connection being made between the plates. For purging of the unit, the potential applied to the plates is simply earthed when the fans are switched to the purge mode, thus releasing the dust collected on the conducting sheet.

The fans are resiliently mounted within the case to reduce structure borne vibration and sealed within the case by means of elastomeric seals. However, condensing water vapour from the cooling exhaust stream would collect on these seals, and consequently the seal under the fans is made from a high porosity open structure which allows the migration of water through it (like a wick in an oil lamp), but provides a very high resistance to air flow. Thus the fans are sealed against unwanted air leakage but will allow the passage of condensed water vapour to escape. Alternatively, a wick may be provided which allows migration of water from the inside of the apparatus to the outside.

Externally and internally the device is equipped with louvres to direct the warm and cold air streams in such a way as to minimise air recirculation.

Embodiments of the present invention will now be described by way of example only with reference to the accompanying drawings in which:

Figure 1 shows a schematic diagram of the layout of the apparatus according to the present invention in a typical installation;

Figure 2 shows the apparatus according to the present invention being operated in the purge mode;

Figure 3 shows a cross section of the apparatus shown in Figures 1 and 2 as seen from above;

Figure 4 shows a cross section of the apparatus shown in Figures 1 and 2 as seen from the side;

Figure 5 shows a corrugated sheet forming part of a first embodiment of the present invention;

Figure 6 is an end plan view of the first embodiment of the present invention;

Figure 6a is a perspective view of the embodiment shown in Figure 6;

Figure 6b is a schematic drawing of an electrostatic dust collector;

Figures 7 and 8 show an alternative embodiment of the present invention.

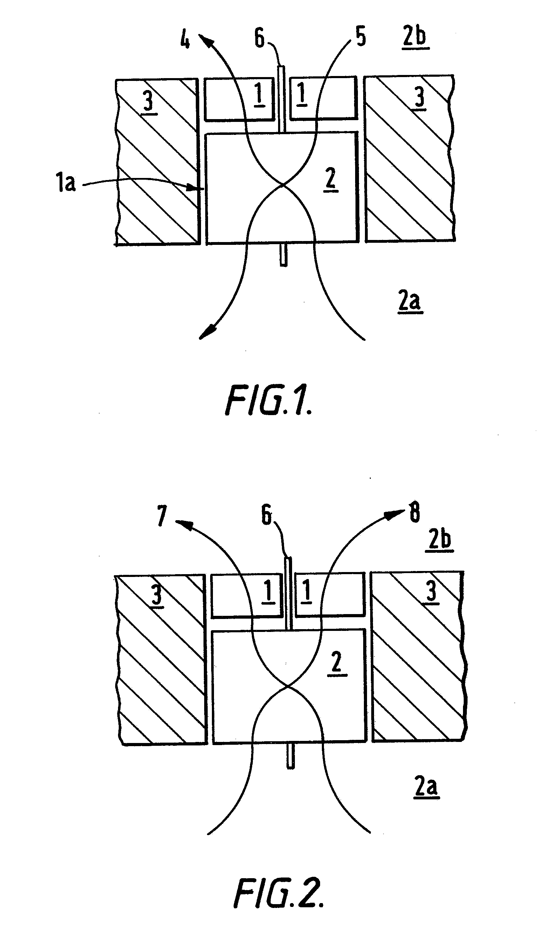

Referring to Figure 1, apparatus according to the present invention comprises a ventilator unit 1a which is

placed within the body of a wall 3 or window (not shown) in order to allow stale air to be extracted from the inside 2a of the room and replaced by fresh air from the outside 2b of the room. Two fans 1 are mounted side by side within the ventilator unit at the end of the unit closest to the outside 2b.

In order to achieve heat exchange between the outgoing (usually warm) air stream 4 and the incoming (usually colder) air stream 5, a heat exchanger 2 is located within the ventilator unit between the fans 1 and the inside of the room 2a. The two air streams 4 and 5 are separated by an internal dividing plate 6 which prevents mixing of the two airstreams.

In normal operation, the fans 1 are driven in opposite directions so that one extracts air from the room and the other introduces fresh air into the room. However, the ventilator unit also includes a dust collector (to be described in more detail below), and is therefore advantageous to be able to reverse the direction of one of the fans 1 so that both fans are extracting air from the room. This is termed "a purge mode", and the unit is operated in this mode to blow the collected dust outside of the room. The purging mode is shown schematically in Figure 2, with both airstreams 7, 8 leaving the room.

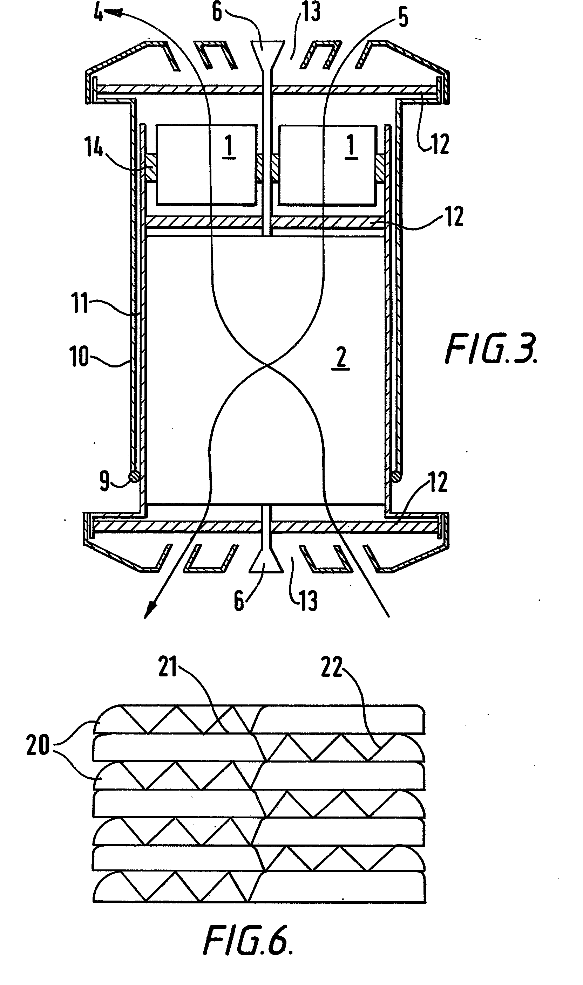

Referring now to Figure 3, a casing for the ventilator unit comprises an inner flanged open ended tube 11 which is surrounded over most of its surface by an outer open ended flanged tube 10, the two tubes being sealed by a sliding elastomeric ring 9. The ends of both tubes are closed by louvered air distributing grills 13, and the two airstreams 4, 5 are separated by a separator 6 which is adjustable in length.

The fans 1 are situated at the end of the tube 11 furthest away from the flange and are secured there by low stiffness mountings 14 which also serve as sealing means between the fans and casing.

The heat exchanger 2 (to be described in more detail below) is situated within the inner tube 11 and is in intimate contact along its length with the tube 11.

Spray and mist suppressing porous elements 12 are situated at the ends of the ventilator and between the fans 1 and the heat exchanger 2.

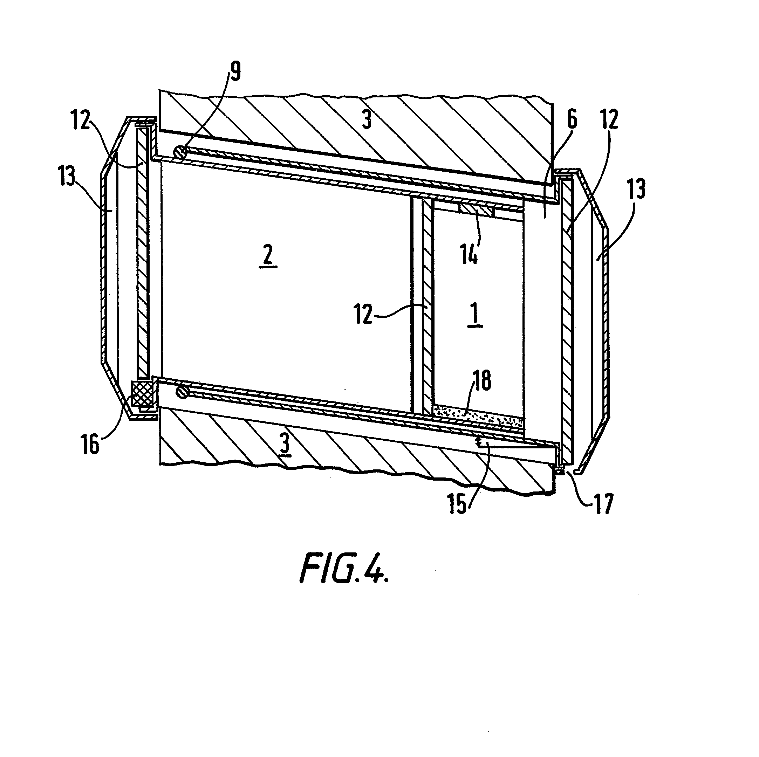

Referring to Figure 4 which is a vertical cross-section through a ventilator unit, the unit is arranged so that when it is installed in a wall or window, the tubes 10, 11 are inclined at an angle 15 to the horizontal. This enables condensed and/or inducted water to drain away to the outside of the room through drain hole 17. A water absorbent member 18 is located beneath the fans, and this member 18 also offers high resistance to airflow. The member 18 serves to assists drainage of water from the ventilator to the outside.

The control electronics which operate the fans 1 and their direction of rotation and the dust collector is situated in a housing 16 and connected to the dust collector and fans 1 by wires (not shown).

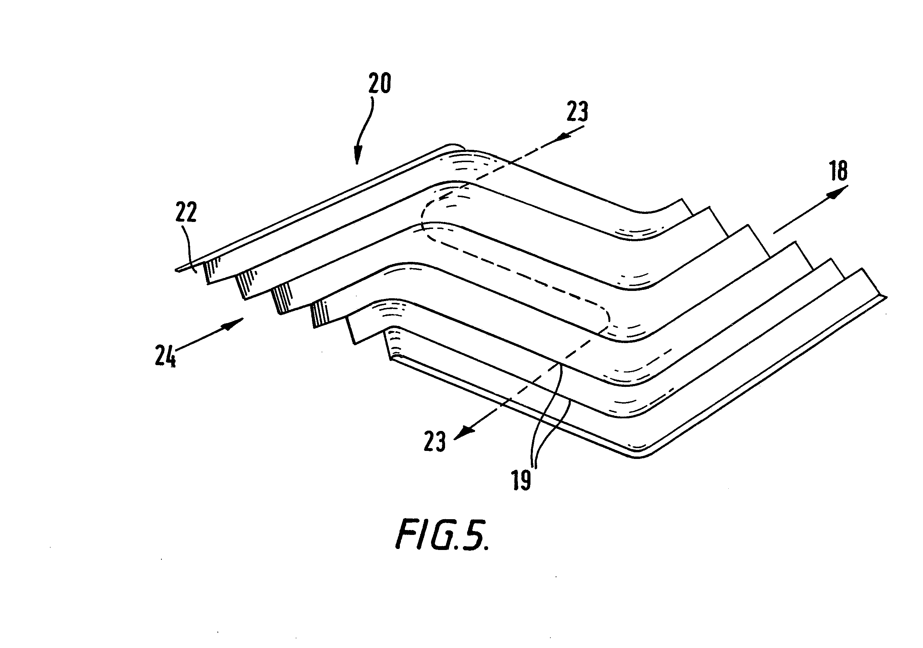

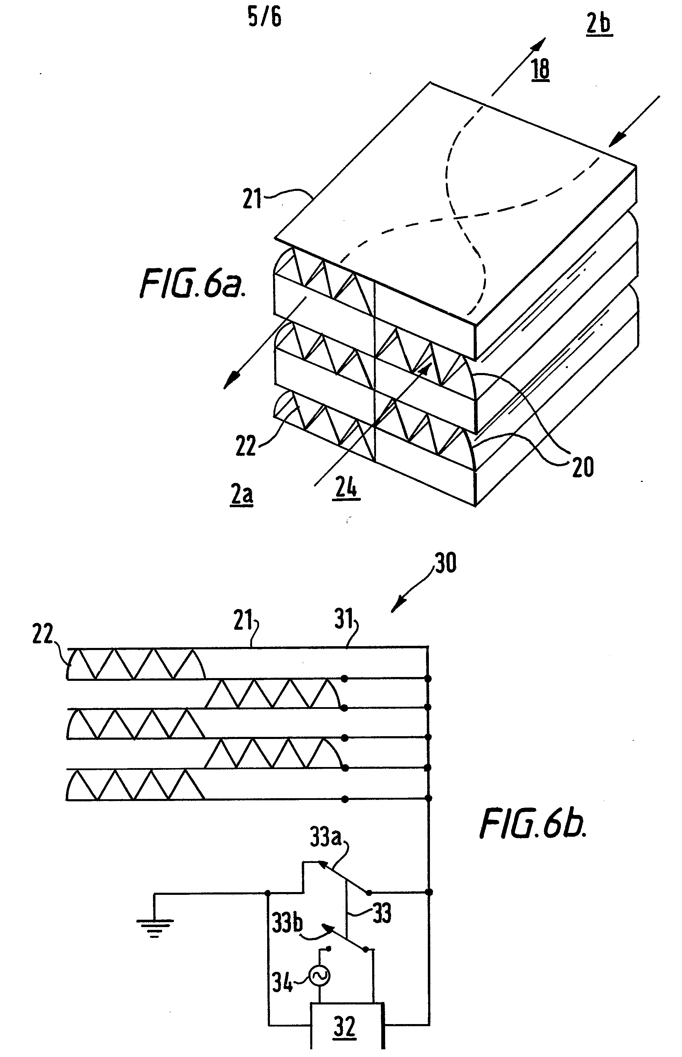

Referring to Figures 5, 6, 6a and 6b, one embodiment of the heat exchanger 2 comprises a number of stacked corrugated sheets 20 which are formed in a Z-shaped pattern (in the plan view). The material of the sheets may be plastic or metal, or metallised plastic. If plastic is used and it is not sufficiently thin, flat sheets 21 of metal, for example aluminium, may be interposed between the corrugated sheets in order to acheive good heat exchange.

The corrugated sheets provide a multiplicity of channel sections through which warm air enters at 24, is turned by the shape of channels to flow laterally, and leaves at 18. The opposing colder air stream 23 enters at the other side of the ventilator unit and flows along a similar path, but the sheets associated with this side are arranged so that the air flow 23 is turned to flow laterally against the direction of flow of the other stream 24.

Because the material of the corrugated sheets is extremely thin, for example between 50 and 300 micrometers, the corrugated entry 22 represents a very low resistance to air flow, since the entry is substantially open and the material thickness constitutes a closure of the area available for flow by some 4%.

The cross over effect achieved by this arrangement of corrugate sheets ensures sufficient heat exchange between the warm and colder air streams and at the same time causes the two streams to be separated and to leave the heat exchanger conveniently spaced from the opposing stream so as to prevent recirculation of extracted or introduced air.

Figure 6 shows the corrugated sheets stacked together with aluminium heat exchange surfaces 21 to produce a heat exchanger by means of inverting every alternate separator. A substantially counterflow heat exchanger can be made using only two different component types. The convolutions 22 in addition to providing separation also seal against mixing of the two airstreams.

Referring now to Figure 6b, an electrostatic dust collector 30 is provided which comprises an electrical connection 31 to each of the metal plates 21 forming part of the heat exchanger. The connections 31 allow a high electrical potential to be applied to the plates by means of high voltage DC supply 32 and double action switch 33 which comprises two linked switches 33a and 33b. The high voltage DC supply 32 is energised by a power supply 34. In operation, when the ventilator unit is in the normal mode, the dust collector is operative and switch 33b is closed whilst switch 33a is open. This causes the plates 21 to be charged to a high potential in order to attract dust electrostatically.

When the unit requires to be operated in the purge mode, switch 33a is closed whilst switch 33b is open, thus earthing the plates 21.

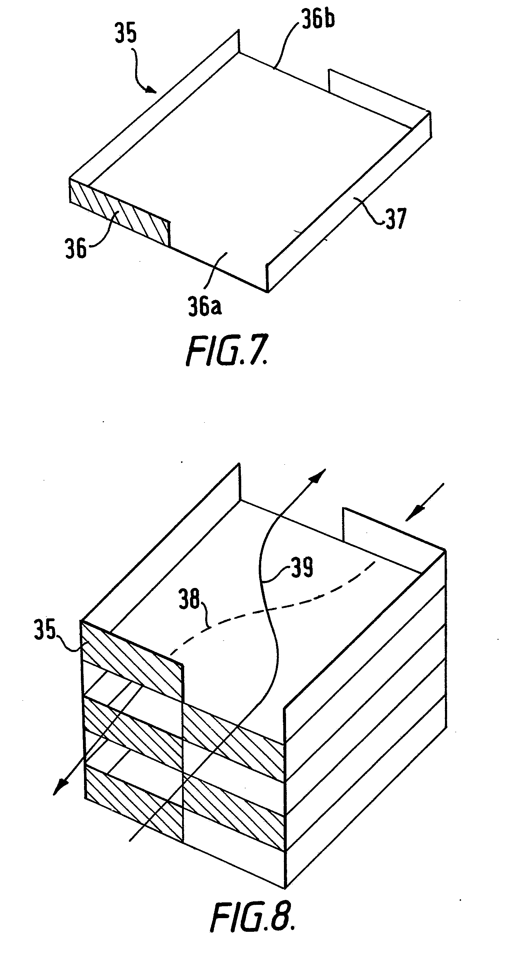

Referring now to Figures 7 and 8, an alternative embodiment of a heat exchanger assembly comprises a number of stacked trays 35 each having end and side walls 36, 37 respectively. Diagonally opposed portions 36a, 36b of the end walls 36 are cut out to define an air flow path. A number of these trays 35 are stacked together as shown in Figure 8 to define two opposing air flow paths 38, 39 which cross over within the length of the assembly.

It should be appreciated that the electrostatic dust collector shown in Figure 6b may be applied to any type of heat exchanger assembly such as those described herein, provided that the heat exchanger plates are electrically conducting. If plastic is used for the components of the heat exchanger, these may be made electrically conducting by coating the plastic with a thin layer of metal, this being known as metallised plastic.

CLAIMS

1. Apparatus for extracting stale air from inside a room and introducing fresh air into the room from outside the room, characterised in that the apparatus comprises an enclosure (10, 11) for insertion in a wall or window (3) of the room with a first end of the enclosure being open to the outside (2b) of the room, and a second end being open to the inside (2a) of the room, two fans (1) located at or near said first end, one of which is drivable to introduce air into the room from outside, and the other being drivable to extract air from the room, and means (2) to effect heat exchange between the outgoing and incoming air.

2. Apparatus according to Claim 1 characterised in that the means (2) to effect heat exchange between the outgoing and incoming air comprises a parallel input and output heat exchanger, with the input and output directions substantially parallel.

3. Apparatus according to Claim 1 or Claim 2 characterised in that the two fans (1) are mounted side by side at the first end of the enclosure.

4. Apparatus according to any of the preceding claims characterised in that the enclosure (10, 11) is adjustable in length to suit varying wall or window thicknesses.

5. Apparatus according to any of the preceding claims characterised in that the heat exchanger (2) includes means (20, 35) to separate the incoming and outgoing air into two distinct air streams, and to cause the two streams to cross over within the heat exchanger whereby air enters and leaves the heat exchanger in two separate and distinct regions at each end of the enclosure.

6. Apparatus according to any of the preceding claims characterised in that the heat exchanger comprises an assembly of stacked thermally conducting sheets.

7. Apparatus according to any of the preceding claims characterised in that a spray suppression member (12) is provided between the heat exchanger and the fans.

8. Apparatus according to any of the preceding claims characterised in that the enclosure (10, 11) slopes downwardly towards the first end thereof.

9. Apparatus according to any of the preceding claims characterised in that there is provided dust collection means (30), and also means to effect fan reversal to blow collected dust outside of the enclosure.

10. A method of extracting stale air from inside a room and introducing fresh air into the room from outside the room, characterised in that the method comprises drawing air through an enclosure (10, 11) fitted in a wall or window (3) of the room by means of a first fan (1) from the outside of the room to the inside, simultaneously drawing air through the same enclosure by means of a second fan (1) from the inside of the room to the outside, and simultaneously effecting heat exchange between the outgoing and incoming air.

4
6
5
2b
3
1
1
3
1a
2
2a

FIG.1.

7
6
8
2b
3
1
1
3
2
2a

FIG.2.

0196175

11.10.05.86

2/6

4
6
13
5
1
1
14
12
12
11
10
2
9
12
6
13
FIG.3.
21
22
20


FIG.6.

9
12
3
6
12
13
13
14
2
12
1
18
16
3
15
17

FIG.4.

18
23
19
23
20
22
24

FIG.5.

2b
18
21
FIG.6a.
22
2a
24
20

30
22
21
31
FIG.6b.
33a
33
33b
34
32

11 10 05

35
36b
37
36
36a

FIG.7.

39
38
35

FIG.8.